Europäisches Patentamt

European Patent Office

Office européen des brevets

(19)

(11) **EP 1 336 292 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.$^7$: **H04N 1/54**

(21) Anmeldenummer: **01994025.3**

(22) Anmeldetag: **31.10.2001**

(86) Internationale Anmeldenummer:
**PCT/EP2001/012614**

(87) Internationale Veröffentlichungsnummer:
**WO 2002/039725 (16.05.2002 Gazette 2002/20)**

(54) **VERFAHREN ZUM OPTIMIEREN EINES BILDBEARBEITUNGS- UND DRUCKPROZESSES**

METHOD FOR OPTIMIZING AN IMAGE PROCESSING AND PRINTING PROCESS

PROCEDE POUR OPTIMISER UN PROCESSUS DE TRAITEMENT D'IMAGE ET D'IMPRESSION

(84) Benannte Vertragsstaaten:
**AT BE CH DE FR GB IE LI MC**

(30) Priorität: **13.11.2000 EP 00811070**

(43) Veröffentlichungstag der Anmeldung:
**20.08.2003 Patentblatt 2003/34**

(73) Patentinhaber: **Alcan Technology & Management AG**
**8212 Neuhausen am Rheinfall (CH)**

(72) Erfinder:
- **ROSENBERGER, Karolina**
  **CH-8218 Osterfingen (CH)**
- **REINHOLD, Matthias**
  **8212 Neuhausen (CH)**
- **BÖNSCH, Fabian**
  **72336 Balingen (DE)**

(56) Entgegenhaltungen:
**EP-A- 0 763 926     US-A- 4 630 076**
**US-A- 4 812 899**

**Beschreibung**

Vorliegende Erfindung betrifft ein Verfahren zur Optimierung von durch Farbdrucker auf Substratoberflächen, insbesondere auf nicht-weisse Substratoberflächen, ausgegebenen Druckbildem und zur Optimierung der verwendeten Druckfarbenmengen, wobei ein Bildmotiv mittels eines computerunterstützten Bildverarbeitungssystem zu einer ausgabebereiten Bildvorlage verarbeitet wird. Femer betrifft die Erfindung nach dem erfindungsgemässen Verfahren bedruckte Verpakkungsfolien.

Bildmotive, mit welchen eine Substratoberfläche bedruckt werden soll, werden mittels computerunterstützten Bildverarbeitungssystemen erfasst bzw. erstellt und in ausgabebereite Bildvorlagen gebracht. Die Bearbeitung der Bilddaten zu ausgabebereiten Bildvorlagen geschieht mit Unterstützung von entsprechender Bildverarbeitungssoftware wie z.B. PageMaker® Quark Xpress®, Barco Packedge® oder Macromedia Freehand® an DTP-Systemen, wobei "DTP" für "Desktop Publishing" bzw. "Publizieren am Schreibtisch" steht. DTP ist eine gängige Bezeichnung für das Erstellen von Druckpublikationen mittels Computer. Die Bilddaten werden an einem Bildschirm nach dem Prinzip der additiven Farbmischung, z.B. im bekannten RGB-Format (R=Rot, G=Grün, B=Blau), dargestellt.

Die zur Ausgabe bereite Bildvorlage wird sodann an ein Bildausgabesystem weitergegeben, in ein für das Bildausgabesystem lesbares Format umgewandelt und über einen Farbdrucker ausgedruckt, wobei beim Bedrucken einer nicht-weissen Substratoberfläche vor dem eigentlichen Druck des Bildmotivs ein weisser Unterdruck ausgeführt wird. Handelt es sich bei der Bedruckung um einen Konterdruck, so wird Weiss als letzte Farbe, d.h. nach dem Drucken des eigentlichen Bildmotivs, als Überdruck auf das Druckbild aufgebracht.

Da die Funktionsweise von Farbdruckern, wie z.B. nach dem elektrophotographischen Verfahren arbeitende Farbdrucksysteme, auf dem Prinzip der subtraktiven Farbmischung basiert, werden die Bilddaten vor der Übergabe an das Bildausgabesystem in ein subtraktives Farbformat umgewandelt. In der Regel wird dazu der bekannte CMY- Farbenraum angewendet, welcher die drei Primärfarbenebenen Cyan- (C-), Magenta- (M-) und Gelb- (Y-) umfasst. Cyan entspricht in etwa einem Blaugrün und Magenta in etwa einem Purpur. Die Drucksysteme verwenden dabei eine Cyan-, Magenta- und Gelb-Druckfarbe, aus welchen weitere Farben erzeugt werden, wobei die Primärdruckarben als Farbfilter wirken. Licht das durch eine C-, M-, oder Y-Primärdruckfarbe fällt, wird in gewissen. Spektralbereichen von der Druckfarbe absorbiert oder gefiltert, so dass lediglich Licht eines begrenzten Spektralbereiches von der Druckfarbe reflektiert, und für das menschliche Auge als Farbe des Toners wahrgenommen wird. Durch ideale Mischung der Primärdruckfarben C, M und Y kann theoretisch Schwarz erzeugt werden, da nun sämtliches Licht absorbiert bzw. gefiltert wird In der Praxis wird jedoch durch Mischung der Primärdruckfarben kein besonders tiefes und kräftiges Schwarz erreicht, so dass neben dem CMY-Primärdruckfarben zusätzlich eine das Licht vollständig absorbierende Schwarz- (K) -Druckfarbe für Schwarzanteile und Graustufen verwendet wird. Der um Schwarz ergänzte Farbenraum wird CMYK-Farbenraum bezeichnet.

In digitalen Bildverarbeitungssystemen ist die Bildvorlage in einzelne Bildpunkte, auch Pixel genannt, aufgeteilt. Jedem Bildpunkt wird beispielsweise bei Anwendung des CMYK-Farbraumes je ein Wert für jede der vier Primärdruckfarben zugewiesen. Dieser Wert stellt die sogenannte Farbdichte dar. Für jeden Bildpunkt können mit den vier Farbebenen und den diesen zugewiesenen Farbdichtewerten verschiedene Mischfarben dargestellt werden.

Die Farbdichte, auch Farbdeckung genannt, ist eine normierte Grösse für die aufgetragene Menge Druckfarbe. Die Farbdichten $F_C$ für C (Cyan), $F_M$ für M (Magenta), $F_Y$ für Y (Yellow bzw. Gelb) und $F_K$ für K (Schwarz) liegen in einem definierten Bereich von 0 bis 1 bzw. 0 - 100%, wobei 1 einen maximalen Auftrag der entsprechenden Druckfarbe und 0 keinen Auftrag der entsprechenden Druckfarbe bedeuten. Die Summe der einzelnen aufgetragenen Farbdichten wird Gesamtfarbdichte genannt. Das Aufbringen der maximalen Farbdichte $F_C$, $F_M$ und $F_Y$ der drei Primärfarben CMY ergibt folglich die hohe Gesamtfarbdichte bzw. Gesamtfarbdeckung von 3 bzw. 300%.

Die Bilddaten der Bildvorlage sind entweder in Form von Raster- oder Vektordaten erfasst. Entsprechend kann die Bildvorlage in einem Bitmap- oder Vektorgraphik-Dateiformat vorliegen. Standardisierte Vektorgraphik-Dateiformate sind beispielsweise PostScript (PS), welches u.a. auch Encapsulated PostScript (EPS) umfasst oder Portable Document Format (PDF). Ein Standartisiertes Bitmap- resp. Rastergraphik-Format ist beispielsweise das Tagged Image File Format (TIFF).

Üblicherweise werden die ausgabebereiten Bildvorlagen in PostScript-Dateien angelegt, wobei diese Dateien neben den eigentlichen Bilddaten weitere, zur Weiterverarbeitung der Bilddaten notwendige Informationen, z.B. bezüglich Formatierung, sowie Instruktionen, wie z.B. Steueranweisungen an das Bildausgabesystem, enthalten. PostScript-Dateien können unter anderem auch in einem Bitmap-Format vorliegende Bildobjekte enthalten. Die Bildvorlage kann somit beispielsweise ein in die PostScript-Datei eingebettetes und in einem Rastergraphik-Format, z.B. TIFF-Format, vorliegendes Objekt sein.

Digitale Bildausgabesysteme enthalten in der Regel einen "Raster Image Processor" (RIP) und eine Druckeinheit. Der Raster Image Processor (RIP) ermittelt aus der beispielsweise in einer PostScript-Datei angelieferten Bildvorlage die Grösse, Menge, und Position der Bildpunkte (Pixel) und wandelt diese in ein für die Druckeinheit interpretierbares Format um. In der Druckeinheit werden die in Druckanweisungen umgewandelten Bilddaten in einen Farbdruck umgesetzt.

Die gängigen Bildverarbeitungssysteme sind für die Bedruckung weisser Substratoberflächen, insbesondere von weissem Papier, ausgelegt. So wird bei der Bildverarbeitung die weisse Substratoberfläche üblicherweise in den Farbgebungsprozess miteinbezogen. Weiss wird beispielsweise durch die Zuweisung Der Gesamtfarbdichte CMYK = 0 generiert, d.h. Bildpunkte mit dem entsprechenden Nullwert erhalten keinen Farbauftrag. Weiss wird neben der Darstellung weisser Flächen auch zur Darstellung der Farbhelligkeit benötigt. Die Farbhelligkeit kann einerseits durch variieren der Farbdichten und andererseits durch eine Rasterdarstellung der Bildpunkte bestimmt werden.

Um beim Bedrucken von farbigen, durchscheinenden oder transparenten Substraten denselben oder einen vergleichbaren Farbeindruck zu erhalten, wie er beim Bedrucken einer weissen Unterlage entsteht, wird deshalb vor dem eigentlichen Aufbringen des Druckbildes die zur Bedruckung vorgesehene Substratoberfläche mit Weiss unterdruckt. Unterdruck bedeutet, dass die Weisse Bedruckung unter dem eigentlichen Druckbild unmittelbar auf der Substratoberfläche liegt. Bei einer Konterbedruckung auf ein transparentes oder durchscheinendes Substrat mit einem am Konterdruck anliegenden farbigen, durchscheinenden oder transparenten, insbesondere nicht-weissen, Substrat wird aus vorgenannten Gründen unmittelbar auf das Druckbild ein weisser Überdruck angelegt.

In Bildbereichen mit genügend grosser Gesamtfarbdichte, d.h. in Bildbereichen, in welcher die weisse Substratoberfläche bedingt durch einen grossen Farbauftrag nicht sichtbar ist bzw. nicht durchscheint, ist jedoch ein weisser Unterdruck nicht notwendig. Durch den weissen Unterdruck werden die dunkle Farbtöne, d.h. die Stellen mit hoher Gesamtfarbdichte, sogar häufig ausgebleicht resp. sie erscheinen ungesättigt, so dass zur Erreichung satter Farben die darüberliegende Gesamtfarbdichte zusätzlich erhöht werden muss.

Durch den flächendeckenden weissen Unter- oder Überdruck und dem darüber angeordneten Druckbild wird überdies vielfach ein sehr hoher Farbauftrag erreicht, was sich z.B. in elektrophotographischen Druckverfahren negativ auf die Verschmelzung des Toners und negativ auf die Bildqualität auswirken kann.

Grundsätzlich lässt sich die Bildverarbeitung auf die spezifischen Farbeigenschaften der zu bedruckenden Substratoberflächen ausrichten. Dies erfordert jedoch eine mit hohem Aufwand verbundene Anpassung der entsprechenden Bildverarbeitungssysteme, insbesondere der Bildverarbeitungssoftware.

Der Erfindung liegt deshalb die Aufgabe zugrunde, ein Verfahren zum Erstellen einer druckbereiten Bildvodage für optisch farbig, durchscheinend, transparent, spiegelnd oder metallisch wirkende Substratoberflächen bzw. Substrate und zum Bedrucken derselben vorzuschlagen, wobei die durch den oben beschriebenen weissen Unter- bzw. Überdruck resultierenden Nachteile beseitigt werden sollen, ohne dass eine aufwendige Anpassung der Bildverarbeitungssoftware notwendig ist.

Erfindungsgemäss wird die Aufgabe dadurch gelöst dass an Bildpunkten der Bildvorlage mit kleiner oder fehlender Gesamtfarbdeckung vor dem Aufbringen des Druckbildes ein Basisdruck in Weiss unmittelbar auf die Substratoberfläche oder bei einem Konterdruck ein Basisdruck in Weiss unmittelbar auf das Druckbild angelegt wird, wobei für jeden Bildpunkt wenigstens folgende Schritte, beispielweise in aufgezeigter mittelbarer oder unmittelbarer Reihenfolge, ausgeführt werden:

a) Darstellen der Bilddaten der ausgabebereiten Bildvorlage in einem Rastergraphik-Format mit den Primärdruckfarben CMYK;

b) Anlegen einer weiteren Farbebene "Weiss" (W);

e) Erfassen der Farbdichtewerte $F_C$ für C (Cyan), $F_M$ für M (Magenta), $F_Y$ für Y (Gelb) und $F_K$ für K (Schwarz) und ermitteln einer Gesamtfarbdichte $S_F$ aus den Farbdichtewerten $F_C$, $F_M$, $F_Y$, und $F_K$.

d) Festlegen des Farbddichtewertes $F_W$ für die Farbebene Weiss als Funktion $F_W = f(S_F)$ der Gesamtfarbdichte $S_F$, wobei die Abhängigkeit $F_W = f(S_F)$ darin besteht dass bei zunehmender Gesamtfarbdichte $S_F$ über das Intervall von $0 \leq S_F \leq S_{Fmax}$ kontinuierlich und/oder sprunghaft kleinere Farbddichtewerte $F_W$ zugewiesen werden, wobei $S_{Fmax}$ der maximal möglichen Gesamtfarbdichte $S_F$ entspricht,

e) Erstellen der modifizierten Bildvorlage in einem Rastergraphik Datenformat mit wenigstens 5 Farbebenen (CMYKW);

f) Zuweisen der modifizierten Bilddaten der Bildvorlage an einen Druckertreibe oder "Raster Image Processor" (RIP) und umwandeln in ein für die Druckereinheit interpretierbares Datenformat, Drucken des Druckbildes und des weissen Basisdruckes.

In bevorzugter Ausführung der Erfindung wird im Fall von $S_F = S_{Fmax}$ der Farbddichtewert $F_W = 0$ zugewiesen. In weiterer bevorzugter Ausführung der Erfindung wird im Fall von $S_F = 0$ der maximale Farbddichtewert $F_W = 1$ zugewiesen.

In Ausgestaltung der Erfindung ist vorgesehen, dass an Bildpunkten der Bildvorlage mit kleiner oder fehlender Gesamtfarbdeckung vor dem Aufbringen des Druckbildes ein Basisdruck in Weiss unmittelbar auf die Substratoberfläche oder bei einem Konterdruck ein Basisdruck in Weiss unmittelbar auf das Druckbild angelegt wird, wobei für jeden Bildpunkt wenigstens folgende Schritte ausgeführt werden:

a) Darstellen der Bilddaten der ausgabebereiten Bildvorlage in einem Rastergraphik-Format mit den Primärdruckfarben CMYK,

b) Anlegen einer weiteren Farbebene "Weiss" (W),

c) Erfassen der den einzelnen Bildpunkten zugeordneten Farbdichtewerte $F_C$ für C (Cyan), $F_M$ für M (Magenta), $F_Y$ für Y (Gelb) und $F_K$ für K (Schwarz),

d) Zuweisung von Gewichtungsfaktoren a, b, c und d mit einem Wert von 0 bis 1 und Bildung gewichteter Farbdichtewerte: $a*F_C$, $b*F_M$, $c*F_Y$ und $d*F_K$,

e) Bildung einer gewichteten Gesamtfarbdichte $S_{Fg}$ aus der Summe der gewichteten Farbdichtewerte: $S_{Fg} = (a*Fc + b*F_M, + c*F_Y + d*F_K)$,

f) Festlegen einer kritischen Gesamtfarbdichte $S_K$ und Bildung des Differenzwertes $D_S = S_{Fg} - S_K$ sowie Festlegen der Intervallsgrenzen x, y mit $0 \leq x \leq (S_{Fmax} - S_K)$ und $(0 - S_K) \leq y \leq 0$, wobei:

    i) im Fall von $D_S \geq 0$ für x = y = 0 für die Farbebene Weiss ein Farbdichtewert $F_W$ von 0,
    ii) im Fall von $D_S < 0$ für x = y = 0 für die Farbebene Weiss ein Farbdichtewert $F_W$ von 1,
    iii) im Fall von $D_S \geq x$ für $0 \leq x \leq (S_{Fmax} - S_K)$ für die Farbebene Weiss ein Farbdichtewert $F_W$ von 0,
    iv) im Fall von $D_S \leq y$ für $(0 - S_K) \leq y \leq 0$ für die Farbebene Weiss ein Farbdichtewert $F_W$ von 1, und
    v) im Fall von $y < D_S < x$ für $0 \leq x \leq (S_{Fmax} - S_K)$ und $(0 - S_K) \leq y \leq 0$ für die Farbebene Weiss in Abhängigkeit einer zu bestimmenden Funktion $f(D_S)$ ein Farbdichtewert $F_W = f(D_S)$ zwischen 0 und 1 gesetzt wird, wobei $F_w = f(D_S)$ für abnehmende Differenzwerte $D_S$ eine kontinuierliche Zunahme der Farbdichtewerte $F_W$ beschreibt,

g) Erstellen der modifizierten Bildvorlage in einem Rastergraphik-Format mit wenigstens 5 Farbebenen (CMYKW) und

h) Zuweisen der modifizierten Bilddaten der Bildvorlage an einen Druckertreiber oder "Raster Image Processor" (RIP) und umwandeln in ein für die Druckereinheit interpretierbares Datenformat, Drucken des Druckbildes und des weissen Basisdruckes.

Handelt es sich um eine gewöhnliche Bedruckung, d.h. nicht um einen Konterdruck, so wird nach erfolgter Zuweisung der modifizierten Bilddaten der Bildvorlage an einen Druckertreiber oder "Raster Image Processor" (RIP) und nach Umwandlung der Bildvorlage in ein für die Druckereinheit interpretierbares Datenformat anhand der den einzelnen Pixeln zugewiesenen Farbdichtewerte $F_W$ für die Farbebene Weiss durch die Druckereinheit unmittelbar auf die Substratoberfläche ein weisser Unterdruck aufgetragen. Das Druckbild wird nachfolgend auf den weissen Unterdruck gedruckt.

Handelt es sich bei der Bedruckung um einen Konterdruck, so wird nach erfolgter Zuweisung der modifizierten Bilddaten der Bildvorlage an einen Druckertreiber oder "Raster Image Processor" (RIP) und nach Umwandlung der Bildvorlage in ein für die Druckereinheit interpretierbares Datenformat das Druckbild auf die Substratoberfläche gedruckt. Anhand der den einzelnen Pixeln zugewiesenen Farbdichtewerte $F_W$ für die Farbebene Weiss wird nachfolgend durch die Druckereinheit ein weisser Überdruck auf das Druckbild aufgetragen.

Der sogenannte weisse Basisdruck liegt für den Betrachter des Druckbildes immer hinter dem eigentlichen Druckbild. Folglich liegt der Basisdruck bei einer gewöhnlichen Bedrukkung auf der Substratoberfläche und das Druckbild ist auf dem Basisdruck angeordnet. Bei einem Konterdruck hingegen liegt das Druckbild unmittelbar auf der Substratoberfläche eines transparenten oder durchscheinenden Substrates auf und der Basisdruck ist auf dem Druckbild angeordnet. Der Basisdruck kann folglich ein Unter- oder Überdruck sein.

"Ausgabebereite Bildvorlage" bedeutet, dass die Aufbereitung des Bildmotivs zu einer auf die Bedrukkung weisser Substratoberflächen ausgelegten Bildvorlage abgeschlossen ist. "Druckbereite Bildvorlage" bedeutet, dass die Bildvorlage zur Bedruckung nicht-weisser Substratoberflächen erfindungsgemäss modifiziert und zur Übergabe an ein Bildausgabesystem bereit liegt.

Bildmotive können beispielsweise Zeichen-, Buchstaben- oder Zahlenfolgen, Abbildungen, Muster, Raster, Zufallsmuster oder Kombination der genannten Elemente enthalten oder daraus bestehen. Das Druckbild ist vorzugsweise ein Farbbild.

Mit dem Einbezug von Gewichtungsfaktoren a, b, c, d kann das unterschiedliche optische Zusammenwirken der einzelnen Primärfarben CMYK mit einer weissen Substratoberfläche berücksichtigt werden. Ein Farbauftrag Gelb (Y) in maximaler Farbdichte von 1 vermag beispielsweise die Substratoberfläche noch nicht optisch opak abzudecken, während beispielsweise ein Farbauftrag Magenta (M) in maximaler Farbdichte von 1 die Substratoberfläche optisch opak abzudecken vermag.

In besonderer Ausführung der Erfindung wird beispielsweise keine Gewichtung vorgenommen und den Gewichtungsfaktoren den Wert 1 zugewiesen: a = b = c = d = 1.

Die Grössen x und y legen Intervallgrenzen für den Differenzwert $D_S = S_F - S_K$ fest. Mit dem Aufstellen der Bedingung $0 \leq x \leq (S_{Fmax} - S_K)$ und $(0 - S_K) \leq y \leq 0$

wird ein Intervall im Bereich von y und x um den oder am Differenzwert $D_S = 0$ gebildet, welcher sich aus $S_F = S_K$ ergibt. Erfindungsgemäss ist vorgesehen, dass für Differenzwerte $D_S$, welche innerhalb des Intervalls liegen, der Farbdichtewert $F_W$ über die Funktion f ($D_S$) ermittelt wird, wobei die Funktion f ($D_S$) für zunehmende Differenzwerte $D_S$ kontinuierlich abnehmende Farbdichtewerte $F_W$ beschreibt. Die Funktion f ($D_S$) kann beispielsweise linear oder nichtlinear, z.B. exponentiell sein. Ferner wird für Differenzwerte $D_S$, die grösser oder gleich x sind, der Farbdichtewert $F_W$ auf 0 und für Differenzwerte $D_S$, die kleiner oder gleich y sind, der Farbdichtewert $F_W$ auf 1 gesetzt. In den Fällen iii) - v) kann jeweils nur x oder y gleich Null sein.

In besonderer Ausführung der Erfindung ist kein Intervall um den Differenzwert $D_S = 0$ vorgesehen. In diesem Fall wird x = y = 0 gesetzt. Im Fall eines Differenzwertes $D_S$ von grösser oder gleich 0 wird für die Farbebene Weiss ein Farbdichtewert $F_W$ von 0 und im Fall eines Differenzwertes $D_S$ von kleiner 0 wird für die Farbebene Weiss ein Farbdichtewert $F_W$ von I gesetzt.

Die Gewichtungsfaktoren a, b, c, d, die kritische Gesamtfarbdichte $S_K$ und die Intervallwerte x und y werden vorzugweise als Eingabegrössen über entsprechende Eingabemittel an die Recheneinheit bzw. die Programmroutine übergeben.

Durch die erfindungsgemässe Zuweisung einer Farbdichte $F_W$ für jeden Bildpunkt wird somit beispielsweise an Bildpunkten mit hoher Farbdeckung, welche den weissen Basisdruck vollständig überdeckt kein oder ein weisser Basisdruck mit geringer Farbdichte $F_W$ ausgeführt, wohingegen an Bildpunkten mit geringen oder keiner Farbdeckung ein weisser Basisdruck mit grosser oder maximaler Farbdichte $F_W$ ausgeführt wird.

Es kann vorgesehen sein, dass, um beispielsweise die optische Wirkung der Substratobertläche in die Bildgestaltung miteinzubeziehen, eine weitere Farbebene mit einer fiktiven Sonderfarbe Z angelegt wird und Bildpunkten mit einer Gesamtfarbdichte CMYK = 0, d.h. Bildpunkte ohne Farbdeckung, bei welchen jedoch auf einen weissen Basisdruck verzichtet werden oder die Farbdichte Fw kleiner 1 sein soll, eine Farbdichte $F_Z$ von grösser 0 bis 1 zugewiesen wird. Die Farbdichte $F_Z$ der Sonderfarbe Z stellt denjenigen Anteil der Farbdichte $F_W$ dar, welcher in der Weiss-Ebene ausgespart werden soll, so dass gilt:

$$F_W = 1 - F_Z.$$

Die Errichtung der Farbebene Z und die Zuweisung der entsprechenden Farbdichten $F_Z$ geschieht vorzugsweise während der Bildverarbeitung, d.h. während der Erstellung der ausgabebereiten Bildvorlage.

In besonderer Ausführung der Erfindung wird für jeden Bildpunkt mit einer Gesamtfarbdichte CMYK = 0 in der Farbebene der Sonderfarbe eine Farbdichte

$F_Z$ von entweder 0 oder 1 zugewiesen, so dass für $F_Z = 0$ ein weisser Basisdruck mit einer maximalen Farbdichte $F_W$ und für $F_Z = 1$ kein weisser Basisdruck ausgeführt wird.

Es kann ferner vorgesehen sein, dass an Bildpunkten, an welchen ganz allgemein $F_W > 0$ ist, die Farbebene Weiss teilweise oder vollständig durch Zuweisung einer Farbdichte $F_Z > 0$ ausgespart wird. Die Gesamtfarbdichte CMYK ist in diesen Fällen Null oder grösser, jedoch kleiner als die maximale Gesamtfarbdichte.

Die erfindungsgemässe Zuweisung der Farbdichtewerte $F_W$ und gegebenenfalls $F_Z$ kann auch während der eigentlichen Bildverarbeitung mittels Desktop-Publishing, d.h. während der Erzeugung der ausgabebereiten Bildvorlage, geschehen. Ferner können die erfindungsgemässen Verfahrensschritte Bestandteil der Bildverarbeitungssoftware sein. In bevorzugter Ausführung werden die erfindungsgemässen Programmschritte in einer separaten Programmroutine an der ausgabebereiten Bildvorlage ausgeführt.

Die ausgabebereite Bildvorlage liegt beispielsweise als PostScript-Datei vor, wobei die Bilddaten der Bildvorlage zur Ausführung der erfindungemässen Verfahrensschritte in ein bearbeitbares TIFF-Format gewandelt werden. Nach Abschluss der Bearbeitung werden die Bilddaten wieder in die PostScript-Datei eingebunden. Die PostScript-Datei mit der erfindungsgemäss modifizierten, druckbereiten Bildvorlage kann sodann an die Bildausgabeeinheit weitergeleitet werden.

Die Bilddaten sind vorzugsweise als Rastergraphik-Objekt in eine PostScript-Datei eingebettet. Das Rastergraphik-Format ist bevorzugt in TIFF-Format der Version 6 oder höher, d.h. in einer Version, welche das Erstellen weiterer Farbebenen neben CMYK zulässt.

Die Druckeinheit des Bildausgabesystems arbeitet vorzugsweise nach einem elektrophotographischen Verfahren unter Einsatz von sogenannten Toner-Systemen. Es kann sich hierbei um ein indirektes oder direktes elektrophotographisches Verfahren handeln. Bevorzugt wird ein indirektes elektrophotographisches Verfahren angewendet, wie es z.B. aus der Xerographie bekannt ist.

Der in den elektrophotographischen Verfahren verwendete Toner kann in fester Form, z.B. pulverförmig, wachs- oder harzartig oder in flüssiger oder pastöser Form vorliegen. Der Toner kann beispielsweise ein Zweikomponenten-Toner, wie Trockentoner, beispielsweise in Pulverform vorliegend, oder Flüssigtoner sein. Weiters kann der Toner in zweckmässiger Ausführung auch ein Einkomponenten-Toner aus beispielsweise Harzpartikeln sein, in denen unter anderem Pigmente dispergiert sind. Bevorzugt sind Einkomponenten-Toner in Form von Harzpartikeln und besonders bevorzugt sind Trockentoner in Pulverform. Der Toner ist zweckmässig ein transparenter oder durchscheinender bzw. lasierender Toner.

Elektrophotographische Verfahren sowie die dazu verwendeten Toner-Systeme sind beispielsweise in "Ullmann's Encyclopedia of Industrial Chemistry, Sixth Edition, 1999, Electronic Release: Chapter 2.1.1. Electrophotography" näher beschrieben.

Das erfindungsgemässe Verfahren eignet sich zur Bedruckung von flexiblen Verpackungsfolien, insbesondere von Verpackungsfolien mit nicht-weissen Oberflächen: Die Verpackungsfolien können beispielsweise transparent, durchscheinend, opak und/oder angefärbt oder durchgefärbt sein. Die Verpackungsfolien können farbige, spiegelnde oder metallisierte Oberflächenschichten enthalten und optisch farbig, spiegelnd und/oder metallisiert wirkende Oberflächen aufweisen.

Die Verpackungsfolien können Monofolien oder Folienverbunde sein. Die Verpackungsfolien können Schichten oder Folien aus Kunststoff, wie Polyolefine, Polyester, Polypropylene, Polyamide oder aus Metallen, wie Aluminium, Eisen, Stahl oder Legierungen davon, oder aus Zellstoffen, wie Papier, Pergamin oder Zellglas, enthalten. Ferner kann das Verpackungsmaterial auch keramische Beschichtungen aufweisen.

Das erfindungsgemässe Verfahren wird insbesondere zur Bedruckung von flexiblen, transparenten oder durchscheinenden Verpackungsfolien mit oder aus Kunststoff sowie zur Bedruckung von flexiblen Verpackungsfolien aus Metall wie, z.B. Aluminium, oder flexiblen Verpackungsfolien, z.B. im wesentlichen aus Kunststoff bestehend, mit optisch metallisierend bzw. spiegelnd wirkenden Oberflächen.

Die Dicke des Verpackungsmaterials kann beispielsweise von 5 μm bis 1000 μm betragen. Zweckmässig sind Dicken von 7 bis 200 μm.

Der Druckprozess kann beispielsweise als Verfahrensschritt in-line im kontinuierlichen Herstellungsprozess von Verpackungsmaterialien bzw. von Verpackungen integriert sein. Die Verpackungsfolie wird vorzugsweise in einer Foliendurchlaufbedruckungsanlage kontinuierlich bedruckt. In einer Druckanlage bzw. Druckeinheit werden an nacheinander angeordneten Druckstationen die Farben Magenta, Cyan, Gelb, Schwarz und Weiss in fallweise unterschiedlicher Reihenfolge gedruckt.

Dank den erfindungsgemässen Verfahrensschritten kann in den meisten Fällen auf einen flächendeckenden weissen Unter- oder Überdruck mit maximaler Farbdichte verzichtet werden. Die weisse Farbdeckung kann vielmehr gezielt den einzelnen Bildpunkten zugewiesen werden. Dadurch wird Toner gespart. Ferner wird die Gesamtfarbdeckung allgemein geringer, was sich positiv auf die Druckqualität auswirkt.

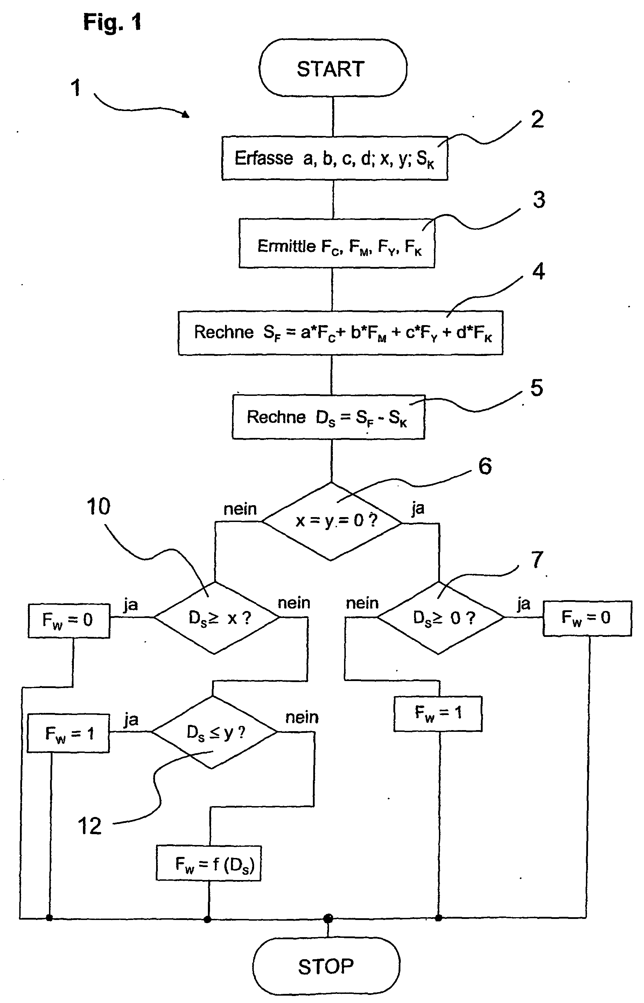

Im folgenden wird die Erfindung beispielhaft und mit Bezug auf das Flussdiagramm gemäss Fig. 1 näher erläutert.

Fig. 1 zeigt ein Flussdiagramm 1 des Algorithmus zur Bestimmung der Farbdichte $F_W$ (Farbebene Weiss) eines einzelnen Bildpunktes. Zu Beginn werden in Schritt 2 die Gewichtungsfaktoren a,b,c und d, ferner die Intervallgrenzen x und y sowie der kritische Gesamtfarbdichtewert $S_K$ als Eingabegrössen erfasst. Die Gewichtungsfaktoren liegen in einem Bereich von 0 bis 1. Die Werte für x und y sind entweder beide "Null" oder liegen im Bereich von $0 \leq x \leq (S_{Fmax} - S_K)$ resp. $(0 - S_K) \leq y \leq 0$, wobei nur x oder y "Null" sein kann.

Für jede Farbebene werden in Schritt 3 die Farbdichtewerte $F_C$, $F_M$, $F_Y$ und $F_K$ ermittelt. In Schritt 4 erfolgt die Berechnung einer gewichteten Gesamtfarbdichte $S_F$. Im nachfolgenden Schritt 5 wird der Differenzwert $D_S$ aus der gewichteten Gesamtfarbdichte $S_F$ und dem kritischen Gesamtfarbdichtewert $S_K$ ermittelt. Falls x und y gemäss Schritt 6 beide gleich "Null" entsprechen, wird für einen Differenzwert $D_S$ von grösser oder gleich "Null" gemäss Schritt 7 der Farbdichtewert $F_W$ für Weiss gleich "Null" und für einen Differenzwert $D_S$ von kleiner "Null" der Farbdichtewert $F_W$ für Weiss gleich "Eins" gesetzt. Falls x und y beide nicht gleich "Null" sind, liegt ein Intervall um den kritischen Gesamtfarbdichtewert $S_K$ vor. Falls der Differenzwert $D_S$ gemäss Schritt 10 grösser oder gleich x ist, wird der Farbdichtewert $F_W$ für Weiss gleich "Null" und falls der Differenzwert $D_S$ gemäss Schritt 12 kleiner oder gleich y ist, wird der Farbdichtewert $F_W$ für Weiss gleich "Eins" gesetzt. In allen anderen Fällen liegt der Differenzwert $D_S$ im Intervall zwischen y und x um den kritischen Gesamtfarbdichtewert $S_K$ und der Farbdichtewert $F_W$ für Weiss wird durch eine lineare Funktion $F_W = f(D_S)$ beschrieben.

**Patentansprüche**

1. Verfahren zur Optimierung von durch Farbdrucker auf Substratoberflächen,- insbesondere auf nicht-weisse Substratoberflächen, ausgegebenen Druckbildern und zur Optimierung der verwendeten Druckfarbenmengen, wobei ein Bildmotiv mittels eines computerunterstützten Bildverarbeitungssystems zu einer ausgabebereiten Bildvorlage verarbeitet wird,
   **dadurch gekennzeichnet, dass**
   an Bildpunkten der Bildvorlage mit kleiner oder fehlender Gesamtfarbdeckung vor dem Aufbringen des Druckbildes ein Basisdruck in Weiss unmittelbar auf die Substratoberfläche oder bei einem Konterdruck ein Basisdruck in Weiss unmittelbar auf das Druckbild angelegt wird, wobei für jeden Bildpunkt wenigstens folgende Schritte ausgeführt werden:

   a) Darstellen der Bilddaten der ausgabebereiten Bildvorlage in einem Rastergraphik-Format mit den Primärdruckfarben CMYK;
   b) Anlegen einer weiteren Farbebene "Weiss" (W);
   c) Erfassen der Farbdichtewerte $F_C$ für C (Cyan), $F_M$ für M (Magenta), $F_Y$ für Y (Yellow) und $F_K$ für K (Schwarz) und ermitteln einer Gesamtfarbdichte $S_F$ aus den Farbdichtewerten $F_C$, $F_M$, $F_Y$, und $F_K$.

d) Festlegen des Farbddichtewertes $F_W$ für die Farbebene Weiss als Funktion $F_W = f(S_F)$ der Gesamtfarbdichte $S_F$, wobei die Abhängigkeit $F_W = f(S_F)$ darin besteht, dass bei zunehmender Gesamtfarbdichte $S_F$ über das Intervall von $0 \leq S_F \leq S_{Fmax}$ kontinuierlich und/oder sprunghaft kleinere Farbddichtewerte $F_W$ zugewiesen werden, wobei $S_{Fmax}$ der maximal möglichen Gesamtfarbdichte $S_F$ entspricht,

e) Erstellen der Bildvorlage in einem Rastergraphik Datenfomnat mit wenigstens 5 Farbebenen (CMYKW);

f) Zuweisen der modifizierten Bilddaten der Bildvorlage an einen Druckertreiber oder "Raster Image Processor" (RIP) und umwandeln in ein für die Druckereinheit interpretierbares Datenformat, Drucken des Druckbildes und des weissen Basisdruckes.

2. Verfahren nach Anspruch 1, wobei Schritt c umfasst:

i) Erfassung der den einzelnen Bildpunkten zugeordneten Farbdichtewerte $F_C$ für C (Cyan); $F_M$ für M (Magenta), $F_Y$ für Y (Yellow) und $F_K$ für K (Schwarz),

ii) Zuweisung von Gewichtungsfaktoren a, b, c und d mit einem Wert von 0 bis 1 und Bildung gewichteter Farbdichtewerte: $a*F_C$, $b*F_M$, $c*F_Y$ und $d*F_K$,

iii) Bildung einer gewichteten Gesamtfarbdichte $S_{Fg}$ aus der Summe der gewichteten Farbdichtewerte: $S_{Fg} = (a*F_C + b*F_M, + c*F_Y + d*F_K)$,

und Schritt d umfasst:

Festlegen einer Kritischen Gesamtfarbdichte $S_K$ und Bildung des Differeazwertes $D_S = S_{Fg} - S_K$ sowie Festlegen der Intervallsgrenzen x, y, wobei für x ein Wert im Bereich von $0 \leq x \leq (S_{Fmax} - S_K)$ und für y ein Wert im Bereich von $(0 - S_K) \leq y \leq 0$ festgelegt wird, und:

i) im Fall von $D_S \geq 0$ für festgelegte Intervallsgrenzen x, y von x = y = 0 für die. Farbebene Weiss ein Farbdichtewert $F_W$ von 0;

ii) im Fall von $D_S < 0$ für festgelegte Intervallsgrenzen x, y von x = y = 0 für die Farbebene Weiss ein Farbdichtewert $F_w$ von 1,

iii) im Fall von $D_S \geq x$ für eine festgelegte Intervallsgrenze x im Bereich von $0 \leq x \leq (S_{Fmax} - S_K)$ für die Farbebene Weiss ein Farbdichtewert $F_W$ von 0,

iv) im Fall von $D_S \leq y$ für eine festgelegte Intervallsgrenze y im Bereich von $(0 - S_K) \leq y \leq 0$ für die Farbebene Weiss ein Farbdichtewert $F_W$

von 1 gesetzt, und

v) im Fall von $y < D_S < x$ für festgelegte Intervallsgrenzen x, y im Bereich von $0 \leq x \leq (S_{Fmax} - S_K)$ und $(0 - S_K) \leq y \leq 0$ für die Farbebene Weiss in Abhängigkeit einer zu bestimmenden Funktion $f(D_S)$ ein Farbdichtewert $F_W = f(D_S)$ zwischen 0 und 1 gesetzt wird, wobei $F_W = f(D_S)$ für abnehmende Diffeienzwerte $D_S$ eine kontinuierliche Zunahme der Farbdichtewerte $F_W$ beschreibt.

3. Verfahren nach einem der Ansprüche 1 bis 2, dadurch gekeanzeichnet, dass die Zuweisung der modifizieptes Bilddaten der Bildvorlage an einen Drukkertreiber oder "Raster Image Processor" (RIP) erfolgt und die Bildvorlage in ein für die Druckereinheit interpretierbares Datenformat umgewandelt wird, und anhand der den einzelnen Pixeln zugewiesenen Farbdichtewerte $F_W$ für die Farbebene Weiss durch die Druckereinheit auf die Substratoberfläche ein weisser Unterdruck aufgetragen wird und auf den weissen Unterdruck nachfolgend das Druckbild gedruckt wird.

4. Verfahren nach einem der Ansprüche 1 bis 3, **dadurch gekennzeichnet, dass** die Bedruckung ein Konterdruck ist und die Zuweisung der modifizierten Bilddaten der Bildvorlage an einen Druckertreiber oder "Raster Image Processor" (RIP) erfolgt und die Bildvorlage in ein für die Druckereinheit interpretierbares Datenformat umgewandelt wird, und auf die Substratoberfläche das Druckbild gedruckt wird und anhand der den einzelnen Pixeln zugewiesenen Farbdichtewerte $F_W$ für die Farbebene Weiss durch die Druckereinheit ein weisser Überdruck auf das Druckbild aufgetragen wird.

5. Verfahren nach einem der Ansprüche 1 bis 4, **dadurch gekennzeichnet, dass** die Bildvorlage in einem TIFF-Rastergraphik-Format vorliegt oder in ein solches umgewandelt wird.

6. Verfahren nach einem der Ansprüche 1 bis 5, **dadurch gekennzeichnet, dass** eine weitere Farbebene init einer fiktiven Sonderfarbe Z angelegt wird und Bildpunkten mit einer Gesamtfarbdichte CMYK = 0, bei welchen auf einen weissen Basisdruck verzichtet werden oder die Farbdichte $F_W$ kleiner 1 sein soll eine Farbdichte $F_Z$ von grösser 0 bis 1 zugewiesen wird, wobei der Farbdichtewert $F_Z$ denjenigen Anteil der Farbdichte $F_W$ der Farbebene Weiss darstellt, welcher in der Farbebene Weiss ausgespart werden soll, so dass bei Erfüllung der Bedingung CMYK = 0 und $F_Z > 0$ die Zuweisung:

$$F_W = 1 - F_Z \text{ gilt.}$$

**7.** Verfahren nach Anspruch 6, **dadurch gekennzeichnet, dass** das Anlegen der Farbebene Z und die Zuweisung der Farbdichtewerte $F_Z$ während der Erstellung der ausgabebereiten Bildvorlage ausgeführt wird.

**8.** Verfahren nach Anspruch 6, **dadurch gekennzeichnet, dass** die Farbdichte $F_Z$ ausschliesslich die Werte 0 oder 1 annehmen kann, und der Farbdichtewert $F_W$ für $F_Z = 0$ auf 1 und für $F_Z = 1$ auf 0 gesetzt wird.

**9.** Verfahren nach einem der Ansprüche 1 bis 8, **dadurch gekennzeichnet, dass** transparente, durchscheinende, opake und/oder angefärbte oder durchgefärbte Verpackungsfolien bedruckt werden.

**10.** Verfahren nach einem der Ansprüche 1 bis 9, **dadurch gekennzeichnet, dass** flexible Verpackungsfolien mit optisch farbig, spiegelnd und/oder metallisiert erscheinenden Oberflächen bedruckt werden.

**11.** Transparente, durchscheinende, opake und/oder angefärbte oder durchgefärbte Verpackungsfolien, bedruckt nach einem Verfahren gemäss den Ansprüchen 1 bis 10.

**12.** Flexible Verpackungsfolien mit optisch farbig, spiegelnd und/oder metallisiert erscheinenden Oberflächen, bedruckt nach einem Verfahren gemäss den Ansprüchen 1 bis 10.

**Claims**

**1.** Method of optimising printed images output on to substrate surfaces, in particular on to non-white substrate surfaces, by colour printers and of optimising the quantities of ink used, an image motif being processed by means of a computer-assisted image-processing system to form an image original ready for output, **characterised in that** white base printing is applied directly to the substrate surface or, in the case of reverse printing, white base printing is applied directly to the printed image at image points of the image original with little or no overall colour coverage before the printed image is applied, at least the following steps being carried out for each image point:

a) displaying the image data of the image original ready for output in a raster graphics format with the primary printing colours CMYK;
b) applying a further colour plane "white" (W);
c) acquiring the colour density values $F_C$ for C (cyan), $F_M$ for M (magenta), $F_Y$ for Y (yellow) and $F_K$ for K (black) and determining an overall colour density $S_F$ from the colour density values $F_C$, $F_M$, $F_Y$ and $F_K$;
d) fixing the colour density value $F_W$ for the colour plane white, as a function $F_W = f(S_F)$ of the overall colour density $S_F$, the dependence $F_W = f(S_F)$ consisting **in that** continuously and/or discontinuously lower colour density values $F_W$ are allocated over the interval of $0 \leq S_F \leq S_{Fmax}$ as the overall colour density $S_F$ increases, where $S_{Fmax}$ corresponds to the maximum possible overall colour density $S_F$;
e) creating the image original in a raster graphics data format with at least five colour planes (CMYKW), and
f) allocating the modified image data of the image original to a printer driver or raster image processor (RIP), converting it into a data format that can be interpreted by the printer unit and printing the printed image and the white base printing.

**2.** Method according to claim 1, in which step c) includes:

i) acquiring the colour density values $F_C$ for C (cyan), $F_M$ for M (magenta), $F_Y$ for Y (yellow) and $F_K$ for K (black) associated with the individual image points;
ii) allocating weighting factors a, b, c and d with a value of 0 to 1 and forming weighted colour density values: $a^*F_C$; $b^*F_M$, $c^*F_Y$ and $d^*F_K$, and
iii) forming a weighted overall colour density $S_{Fg}$ from the sum of the weighted colour density values: $S_{Fg} = (a^*F_C + b^*F_M + c^*F_Y = d^*F_K)$,

and step d) includes:
fixing a critical overall colour density $S_K$, forming the differential value $D_S = S_{Fg} - S_K$ and, fixing the interval limits x, y, where a value in the range. of $0 \leq x \leq (S_{Fmax} - S_K)$ is fixed for X and a value in the range of $(0 - S_K) \leq y \leq 0$ is fixed for y, and

i) a colour density value $F_W$ of 0 is set for the colour plane white in the case where $D_S \geq 0$ for fixed interval limits x, y of x = y = 0;
ii) a colour density value $F_W$ of 1 is set, for the colour plane white in the case where $D_S < 0$ for fixed interval limits x, y of x = y = 0;
iii) a colour density value $F_W$ of 0 is set for the colour plane white in the case where $D_S \geq x$ for a fixed interval limit x in the range of $0 \leq x \leq (S_{Fmax} - S_K)$;
iv) a colour density value $F_W$ of 1 is set for the colour plane white in the case where $D_S \leq y$ for a fixed interval limit y in the range of $(0 - S_K) \leq y \leq 0$, and
v) a colour density value $F_W = f(D_S)$ between 0 and 1 is set for the colour plane white as a function of a function f $(D_S)$ to be determined in the case where $y < D_S < x$ for fixed interval limits x, y in the range of $0 \leq x \leq (S_{Fmax} - S_K)$ and $(0 - S_K) \leq y \leq 0$, where $F_W = f (D_S)$ describes a continuous increase in the colour density values $F_W$ for decreasing differential values $D_S$.

3. Method according to one of claims 1 to 2, **characterised in that** the modified image data of the image original is allocated to a printer driver or raster image processor (RIP), the image original is converted into a data format that can be interpreted by the printer unit, white underprinting is applied to the substrate surface by the printer unit by way of the colour density values $F_W$ for the colour plane white allocated to the individual pixels and then the printed image is printed on the white underprinting.

4. Method according to one of claims 1 to 3, **characterised in that** the printing is reverse printing, the modified image data of the image original is allocated to a printer driver or raster image processor (RIP), the image original is converted into a data format that can be interpreted by the printer unit, the printed image is printed on the substrate surface and white overprinting is applied to the printed image by the printer unit by way of the colour density values Fw for the colour plane white allocated to the individual pixels.

5. Method according to one of claims 1 to 4, **characterised in that** the image original is in a TIFF raster graphics format or is converted into a format of this kind.

6. Method according to one of claims 1 to 5, **characterised in that** a further colour plane with a fictitious special colour Z is applied and a colour density Fz of greater than 0 to 1 is allocated to image points with an overall colour density CMYK = 0, in which white base printing is dispensed with or the colour density $F_W$ is supposed to be less than 1, the colour density value $F_Z$ representing that part of the colour density $F_W$ of the colour plane white which is to be left blank in the colour plane white, so that when the condition CMYK = 0 and $F_Z > 0$ is satisfied, the allocation:

$$F_W = 1 - F_Z \text{ applies.}$$

7. Method according to claim 6, **characterised in that** the colour plane Z is applied and the colour density values $F_Z$ are allocated during the creation of the image original ready for output.

8. Method according to claim 6, **characterised in that** the colour density $F_Z$ can assume exclusively the values 0 or 1 and the colour density value $F_W$ is set at l for $F_Z = 0$ and at 0 for $F_Z = 1$.

9. Method according to one of claims 1 to 8, **characterised in that** transparent, translucent or opaque packaging films and/or packaging films which have coloured surfaces or which are coloured through are printed.

10. Method according to one of claims 1 to 9, **characterised in that** flexible packaging films are printed with surfaces appearing to be optically coloured, specular and/or metallised.

11. Transparent, translucent or opaque packaging films and/or packaging films which have coloured surfaces or which are coloured through, printed by a method according to claims 1 to 10.

12. Flexible packaging films with surfaces appearing to be optically coloured, specular and/or metallised, printed by a method according to claims 1 to 10.

**Revendications**

1. Procédé d'optimisation d'images imprimées délivrées par une imprimante couleurs sur des surfaces de substrat, en particulier sur des surfaces de substrat non blanches et en vue de l'optimisation des quantités de couleurs d'impression utilisées, un motif d'image étant traité au moyen d'un système de traitement d'image assisté par ordinateur en un modèle d'image prêt à être délivré,
**caractérisé en ce que**
en des points d'image du modèle d'image à recouvrement de couleurs faible ou manquant, avant l'application de l'image d'impression, une impression de base en blanc est appliquée directement sur la surface du substrat ou dans le cas d'une contre-impression, une impression de base en blanc est appliquée directement sur l'image d'impression, pour chaque point d'image étant effectuées au moins les étapes suivantes:

a) Représentation des données d'image du modèle d'image prêt à être délivré dans un format graphique de trame avec les couleurs d'impression primaires CMYK;
b) Application d'un autre plan de couleur "blanc" (W);
c) Saisie des valeurs de densité de couleur $F_C$ pour C (Cyan), $F_M$ pour M (Magenta), $F_Y$ pour Y (Jaune) et $F_K$ pour K (NOIR) et détection d'une densité de couleurs globale $S_F$ à partir des valeurs de densité de couleur $F_C$, $F_M$, $F_Y$ et $F_K$ ;
d) Détermination de la valeur de densité de couleur Fw pour le plan de couleur blanc en tant que fonction $F_W = f(S_F)$, de la densité de couleur globale $S_F$, la relation $F_W = f(S_F)$ consistant **en ce qu'**à densité de couleurs globale croissante $S_F$ sur l'intervalle de $0 \leq S_F \leq S_{Fmax}$ des valeurs de densité de couleur $F_W$ faibles sont affectées continûment et/ou par échelons, $S_{Fmax}$ correspondant à la densité de couleurs globale maximale possible $S_F$,

e) Etablissement du modèle d'image dans un format de données graphiques de trame avec au moins 5 plans de couleur (CMYKW):

f) Affectation des données d'image modifiées du modèle d'image à un circuit d'excitation d'impression ou "Processeur d'Image de Trame" (RIP) et conversion en un format de données pouvant être interprété par l'unité d'impression, impression de l'image et de l'impression de base de blanc.

2. Procédé selon la revendication 1, l'étape c) comprenant:

   i) Détection des valeurs de densité de couleurs associées aux différents points d'image, $F_C$ pour C(Cyan), $F_M$ pour M (Magenta), $F_Y$ pour Y (Jaune) et $F_K$ pour K (Noir),
   ii) Affectation de coefficients de pondération a, b, c et d avec une valeur de 0 à 1 et formation des valeurs de densité de couleur pondérées : $a*F_C$, $b*F_M$, $c*F_Y$ et $d*F_K$,
   iii) Formation d'une densité de couleurs globale pondérée $S_{Fg}$ à partir de la somme des valeurs de densité de couleur pondérées: $S_{Fg} = (a*F_C + b*F_M + c*F_Y + d*F_K)$,

   et l'étape d) comprenant:
   la détermination d'une densité de couleurs globale critique $S_K$ et la formation de la valeur de différence $D_S = S_{Fg} - S_K$ ainsi que la détermination des limites d'intervalle x,y, pour x étant fixée une valeur dans la plage de $0 \leq x \leq (S_{Fmax} - S_K)$ et pour y étant fixée une valeur dans la plage de $(0 - S_K) \leq y \leq 0$, et:

   i) dans le cas de $D_S \geq 0$ pour des limites d'intervalle déterminées x,y de x = y = 0 pour le plan de couleur blanc une valeur de densité de couleur $F_W$ de 0,
   ii) dans le cas de $D_S < 0$ pour des limites d'intervalle déterminées x,y de x = y = 0 pour le plan de couleur blanc une valeur de densité de couleur $F_W$ de 1,
   iii) dans le cas de $D_S \geq x$ pour une limite d'intervalle déterminée x dans la plage de $0 \leq x \leq (S_{Fmax} - S_K)$ pour le plan de couleur blanc une valeur de densité de couleur $F_W$ de 0,
   iv) dans le cas de $D_S \leq y$ pour une limite d'intervalle déterminée y dans la plage de $(0 - S_K)$

   < y ≤ 0 pour le plan de couleur blanc une valeur de densité de couleur Pu de 1, est posée, et
   v) dans le cas de y < Ds < x pour des limites d'intervalle déterminées x,y dans la plage de $0 \leq x \leq (S_{Fmax} - S_K)$ et $(0 - S_K) \leq y \leq 0$ pour le plan de couleur blanc en relation à une fonction à déterminer $f(D_S)$ une valeur de densité de couleur $F_W = f(D_S)$ entre 0 et 1 est posée, $F_W = f(D_S)$ décrivant une croissance continue des valeurs de densité de couleur $F_W$ pour des valeurs de différence décroissantes $D_S$.

3. Procédé selon une des revendications 1 et 2, **caractérisé en ce que** l'affectation des données d'image modifiées du modèle d'image est effectuée à un circuit d'excitation d'imprimante ou "Processeur d'Image de Trame" (RIP) et le modèle d'image est converti en un format de données pouvant être interprété par l'unité d'impression, et à l'aide des valeurs de densité de couleur $F_W$ affectées aux différents pixels pour le plan de couleur blanc, une sous-impression blanche est appliquée par l'unité d'impression sur la surface du substrat et sur la sous-impression blanche est imprimée ensuite l'image d'impression.

4. Procédé selon une des revendications 1 à 3, **caractérisé en ce que** l'impression est une contre-impression et l'affectation des données d'image modifiées du modèle d'image est effectuée à un circuit d'excitation d'imprimante ou "Processeur d'Image de Trame" (RIP) et le modèle d'image est converti en un format de données pouvant être interprété par l'unité d'impression, et l'image d'impression est imprimée sur la surface du substrat et à l'aide des valeurs de densité de couleur $F_W$ affectées aux différents pixels pour le plan de couleur blanc par l'unité d'impression, une surimpression blanche est appliquée sur l'image d'image.

5. Procédé selon une des revendications 1 à 4, **caractérisé en ce que** le modèle d'image existe en un format graphique de trame TIFF ou est converti en un tel format.

6. Procédé selon une des revendications 1 à 5, **caractérisé en ce qu'**un autre plan de couleur avec une couleur particulière fictive Z est appliqué et des points d'image avec une densité de couleurs globale CMYK = 0, dans lesquels on renonce à une impression de base blanche ou la densité de couleur $F_W$ doit être inférieure à 1, une densité de couleur $F_Z$ de plus de 0 à 1 est affectée, la valeur de densité de couleur $F_Z$ représentant cette fraction de la densité de couleur $F_W$ du plan de couleur blanc, qui doit être épargné dans le plan de couleur blanc, de sorte que lorsque la condition CMYK = 0 et $F_Z > 0$, l'affectation :

$$F_W = 1 - F_Z \text{ s'applique}$$

7.  Procédé selon la revendication 6, **caractérisé en ce que** l'application du plan de couleur Z et l'affectation des valeurs de densité de couleur $F_Z$ est effectuée durant l'établissement du modèle d'image prêt à être délivré.

8.  Procédé selon la revendication 6, **caractérisé en ce que** la densité de couleur $F_Z$ peut prendre exclusivement les valeurs 0 ou 1, et la valeur de densité de couleur $F_W$ est fixée à 1 pour $F_Z = 0$ et à 0 pour $F_Z = 1$.

9.  Procédé selon une des revendication 1 à 8, **caractérisé en ce que** des pellicules d'emballage transparentes, translucides, opaques et/ou colorées ou colorées par transparence sont imprimées.

10. Procédé selon une des revendications 1 à 9, **caractérisé en ce que** des pellicules d'emballage souples avec des surfaces apparaissant optiquement colorées, réfléchissantes et/ou métallisées sont imprimées.

11. Pellicules d'emballage transparentes, translucides, opaques et/ou colorées ou colorées par transparence , imprimées selon un procédé selon les revendications 1 à 10.

12. Pellicules d'emballage souples avec des surfaces apparaissant optiquement colorées, réfléchissantes et/ou métallisées, imprimées selon un procédé selon les revendications 1 à 10.

**Fig. 1**

START

1

Erfasse a, b, c, d; x, y; $S_K$  → 2

Ermittle $F_C$, $F_M$, $F_Y$, $F_K$  → 3

Rechne $S_F = a*F_C + b*F_M + c*F_Y + d*F_K$  → 4

Rechne $D_S = S_F - S_K$  → 5

6

x = y = 0 ?  nein / ja

10

$F_W = 0$  ja ← $D_S \geq x$ ?  nein

7

nein  $D_S \geq 0$ ?  ja → $F_W = 0$

$F_W = 1$  ja ← $D_S \leq y$ ?  nein

12

$F_W = 1$

$F_W = f(D_S)$

STOP